# EUROPÄISCHE PATENTSCHRIFT

(11) **EP 3 274 611 B1**
(45) Veröffentlichungstag und Bekanntmachung des Hinweises auf die Patenterteilung: **02.12.2020**
(21) Anmeldenummer: 16717090.1
(22) Anmeldetag: 22.03.2016
(51) Int. Cl.: F16H 25/20

(54) **VIERSTUFIGER TELESKOPAKTOR MIT GEWINDETRIEB**
FOUR-STAGE TELESCOPIC ACTUATOR WITH A SCREW DRIVE
ACTIONNEUR TÉLESCOPIQUE À QUATRE ÉLÉMENTS, POURVU D'UN ENTRAÎNEMENT PAR FILETAGE

(30) Priorität: 25.03.2015 DE 102015104484
(43) Veröffentlichungstag der Anmeldung: 31.01.2018
(73) Patentinhaber: A. Mannesmann Maschinenfabrik GmbH, 42859 Remscheid (DE)
(72) Erfinder: HÜBNER, Torsten, 42659 Solingen (DE); BRUNNER, Wilhelm, 40723 Hilden (DE)
(74) Vertreter: Osterhoff, Utz
(86) Internationale Anmeldenummer: PCT/DE2016/100135
(87) Internationale Veröffentlichungsnummer: WO 2016/150434

(56) Entgegenhaltungen:
- FR-A1- 2 655 634
- US-A- 5 035 094
- US-A1- 2009 016 814

## Beschreibung

Die vorliegende Erfindung betrifft einen Teleskopaktor zur Ausführung einer Linearbewegung gemäß den Merkmalen im Oberbegriff von Patentanspruch 1.

Aus dem Stand der Technik ist es bekannt für lineare Bewegungen von verschiedenen Maschinenteilen Aktoren einzusetzen. So sind beispielsweise aus dem Stand der Technik Hydraulik- oder Pneumatikaktoren, bei denen eine Kolbenstange aus einem Zylinder aus- oder einfährt, bekannt.

Ferner sind elektromechanische Aktoren in Form von Spindeltrieben bekannt, bei denen eine Rotationsbewegung eines Antriebes in eine axiale Bewegung durch Drehen einer Spindel oder einer Mutter umgesetzt wird.

Gerade wenn es zu hohen Genauigkeitsanforderungen in Bezug auf eine exakte axiale Verstellung in Verbindung mit dem schnellen Einnehmen einer axialen Verschiebeposition kommt, sind Aktoren mit Kugelgewindetrieben bekannt. Der Kugelgewindetrieb weist dazu eine Kugelgewindespindel mit einem umlaufenden Gewinde sowie eine Kugelgewindemutter auf, wobei Kugelgewindemutter und Kugelgewindespindel unter Eingliederung von Kugeln zum formschlüssigen Eingriff kommen. Wird bei drehfest gelagerter Mutter eine in Axialrichtung fixierte Kugelgewindespindel gedreht, so führt die Mutter in Relation zu der Kugelgewindespindel eine axiale Verschiebebewegung aus. Die Umsetzung von Drehbewegung in Axialbewegung ist dabei abhängig von der Steigung des Gewindes. Der Vorteil ist eine, insbesondere geringe Reibung zwischen Kugelgewindemutter und Kugelgewindespindel aufgrund der Eingliederung der Kugeln, bei gleichzeitig exakter axialer Positionierbarkeit. Zudem sind Kugelgewindetriebe annähernd verschleißfrei.

Aus dem Stand der Technik sind auch teleskopartig ausfahrbare Linearaktoren mit Kugelgewindetrieben bekannt, wie beispielsweise in der WO 98/43001 A1 oder der DE 92 09 280 U1 beschrieben.

Aus der D1 FR 2 655 634 A1 ist ein beidseitig ausfahrbarer vierstufiger Linearaktor bekannt. Ferner sind einseitig ausfahrbare Linearaktoren aus D1 US 2009/016814 A1 und D3 US 5 035 094 A bekannt.

Aufgabe der vorliegenden Erfindung ist es einen Teleskopaktor bereitzustellen, der bei kompaktem Baumaß im eingefahrenen Zustand einen großen Ausfahrweg bereitstellt, bei gleichzeitiger gezielter und exakter Einstellmöglichkeit einer jeden Betriebsposition während des Einfahr- oder Ausfahrvorganges.

Die zuvor genannte Aufgabe wird erfindungsgemäß mit einem Teleskopaktor gemäß den Merkmalen im Patentanspruch 1 gelöst.

Vorteilhafte Ausgestaltungsvarianten der vorliegenden Erfindung sind Gegenstand der abhängigen Patentansprüche.

Der erfindungsgemäße Teleskopaktor zum Ausführen einer Linearbewegung, wobei ein Motor vorgesehen ist, der ein Antriebsmoment auf einen Kugelgewindetrieb aufbringt, so dass eine Kugelgewindespindel linear gegenüber einer Kugelgewindemutter ausfahrbar oder einfahrbar ist, zeichnet sich dadurch aus, dass der Teleskopaktor vier Gewindetriebe aufweist und beidseitig gleichzeitig in Axialrichtung ausfährt oder einfährt, wobei sich der Gesamtausfahrweg durch vier Teilausfahrwege zusammensetzt.

Als Gewindetrieb kann ein konventioneller Gewindetrieb aufweisend eine Gewindespindel und eine Gewindemutter verwendet werden. Besonders bevorzugt werden jedoch Kugelgewindetriebe und/oder Rollengewindetriebe verwendet. Im Falle eines Kugelgewindetriebes wird mindestens einer der vier Gewindetriebe als Kugelgewindetrieb mit Kugelgewindespindel und Kugelgewindemutter unter Eingliederung von Kugeln ausgebildet. Alternativ oder ergänzend kann mindestens ein Gewindetrieb als Rollengewindetrieb ausgebildet sein. Im Rahmen der Erfindung können auch Mischformen der verschiedenen Gewindetriebe verwendet werden, so dass beispielsweise ein Kugelgewindetrieb mit einem Rollengewindetrieb verwendet wird oder aber auch ein Kugelgewindetrieb bzw. Rollengewindetrieb mit einem konventionellen Gewindetrieb verwendet wird.

In der nachfolgenden Beschreibung sowie in dem Ausführungsbeispiel wird der Erfindungsgedanke mit einem Kugelgewindetrieb erläutert. Alternativ oder ergänzend können Rollengewindetriebe oder aber auch konventionelle Gewindetriebe eingesetzt sein um den vierstufigen Teleskopaktor auszubilden.

Im Rahmen der Erfindung ist es somit möglich einen Teleskopaktor, welcher auch als Linearaktor bezeichnet werden kann, derart auszubilden, dass er im vollständig ausgefahrenen Zustand eine axiale Länge aufweist, die größer gleich dem 2,5-fachen, insbesondere größer gleich dem 2,8-fachen, bevorzugt größer gleich dem 2,9-fachen und besonders bevorzugt größer gleich dem 3-fachen der axialen Länge im vollständig eingefahrenen Zustand entspricht. Dies bedeutet, dass bei einem Teleskopaktor mit besonders kompakter Bauform im vollständig eingefahrenen Zustand die Möglichkeit besteht, einen demgegenüber großen Ausfahrweg zu realisieren. Weist beispielsweise der Teleskopaktor im vollständig eingefahrenen Zustand eine axiale Länge von 100 cm auf, so ist es erfindungsgemäß insbesondere möglich durch Ausführung der Linearbewegung den Teleskopaktor auf eine Länge größer gleich 300 cm auszufahren. Die Länge im ausgefahrenen Zustand ist maximal bei dem 4-fachen der Länge im eingefahrenen Zustand begrenzt.

Der gesamte Ausfahrweg setzt sich dabei durch die vier Teilausfahrwege der vier Kugelgewindetriebe zusammen. Dies bedeutet, dass jeder Kugelgewindetrieb einen Ausfahrweg besitzt und bei Addition der vier Ausfahrwege sich der Gesamtausfahrweg des Teleskopaktors ergibt. Dabei ist es weiterhin erfindungsgemäß möglich, einen jeden Teilausfahrweg durch die Zuordnung der Steigung des Gewindes von Kugelgewindespindel und Kugelgewindemutter zu beeinflussen. Insbesondere die Abstimmung aller vier Kugelgewindetriebe relativ zueinander ermöglicht es dann in den verschiedenen Betriebspositionen während des Ausfahrens oder Einfahrens, dass ein vorausgelegter Teleskopaktor vier gleichzeitig ausfahrbare Kugelgewindetriebe aufweist. Dies bietet insbesondere den Vorteil, dass die Auszugsreihenfolge nicht von den Reibungsverhältnissen oder aber den Verfahrenden einzelner Stufen abhängig ist.

Damit der Teleskopaktor beidseitig in Axialrichtung ausfahrbar ist, sind die vier Kugelgewindetriebe paarweise eingeteilt, so dass sich ein erstes Paar und ein zweites Paar ergeben. Das erste Paar fährt dann zu einer Seite aus dem Teleskopaktor in Axialrichtung aus und das zweite Paar fährt auf der gegenüberliegenden Seite des Teleskopaktors ebenfalls in Axialrichtung aus. Bei Umkehr des Antriebsmomentes erfolgt eine Einfahrbewegung. Bevorzugt weisen jeweils die beiden Gewindetriebe eines Paares entgegensetzte Steigungsrichtungen auf. Dies bedeutet ein Gewindetrieb ist linksgängig und der andere Gewindetrieb des gleichen Paares demgegenüber rechtsgängig ausgebildet.

Jedes Paar von Kugelgewindetrieben weist wiederum eine innenliegende und eine außenliegende Kugelgewindespindel auf, wobei im eingefahrenen Zustand die jeweils innenliegende Kugelgewindespindel in der außenliegenden Kugelgewindespindel, insbesondere konzentrisch aufgenommen ist. Ein erstes innenliegendes Paar von Kugelgewindetrieben ist wiederum absolut innenliegend in einem zweiten außenliegenden Paar von Kugelgewindetrieben im eingefahrenen Zustand angeordnet. Bezogen auf die Radialrichtung auf die von der Axialrichtung abstehende Radialrichtung sind die jeweiligen Kugelgewindetriebe konzentrisch ineinander geschachtelt angeordnet, wobei in Axialrichtung im eingefahrenen Zustand eine zumindest teilweise ineinander Schachtelung vorliegt. Damit jedes Paar von Kugelgewindetrieben zeitgleich eine Ausfahrbewegung bzw. Einfahrbewegung durchführt, sind die Gewindeverläufe eines jeden Paares in entgegensetzte Richtung orientiert. Eine Ausschraubbewegung einer ersten Kugelgewindespindel bedingt dann gleichzeitig eine Ausschraubbewegung einer zweiten, paarweise damit verbundenen Gewindespindel und umgekehrt.

Die einzelnen Kugelgewindetriebe haben somit eine Hubaufteilung, so dass in jeder Betriebsstufe bei Ausführen der Ausfahr- bzw. Einfahrbewegung die Relativposition zueinander sowie die Absolutposition gegenüber einem Gehäuse des Teleskopaktors bestimmt ist.

Als Motor zum Aufbringen des Antriebsmomentes, insbesondere in einer Drehrichtung ist parallel zur Axialachse der Linearbewegung versetzt angeordnet und überträgt das Drehmoment über ein Hilfsmittel, welches beispielsweise ein Zahnrad oder auch ein Keilriemen oder ein Kettenantrieb sein kann. Der Motor selbst ist insbesondere als Elektromotor ausgebildet und kann beispielsweise ein frequenzgeregelter Drehstrommotor, ein Drehstromservomotor oder auch ein Schrittmotor sein.

In dem Gehäuse des Teleskopaktors ist ferner ein Antriebsrad drehbar gelagert, insbesondere ist das Antriebsrad mit einem Loslager mit einem Drehfreiheitsgrad axial verschiebefest gelagert. Über das Hilfsmittel wird das Antriebsmoment auf das Antriebsrad übertragen, wobei das Antriebsrad drehfest mit nachfolgend beschriebenen Hülsen gekoppelt ist. Durch Beaufschlagen des Motors mit Energie wird somit ein Drehmoment auf das Antriebsrad übertragen und der Teleskopaktor führt eine Ausfahrbewegung bzw. Einfahrbewegung aus.

Hierzu ist eine erste Kugelgewindemutter des ersten Kugelgewindeantriebs an einem Ende des Gehäuses drehfest und in Axialrichtung veschiebefest mit dem Gehäuse gekoppelt. Führt nunmehr die erste Kugelgewindespindel eine Drehbewegung aus, so schraubt sich die Kugelgewindespindel in Relation aus der Kugelgewindemutter aus oder in diese hinein, führt mithin die Linearbewegung aus.

Die erste Kugelgewindespindel ist wiederum an ihrem ausfahrenden Ende mit einer zweiten Kugelgewindespindelmutter drehfest und bezogen in Axialrichtung verschiebefest gekoppelt. Dies bedeutet, dass die zweite Kugelgewindespindelmutter gegenüber dem Gehäuse relativ verfahrbar ist, jedoch mit dem Ende der ersten Kugelgewindespindel drehfest und verschiebefest gekoppelt ist. Die in der zweiten Kugelgewindespindelmutter geführte zweite Kugelgewindespindel ist an einer durch den Teleskopaktor zu bewegenden Lagerstelle drehfest und in Axialrichtung verschiebefest gekoppelt. Die Drehbewegung der zweiten Kugelgewindespindelmutter sorgt somit dafür, dass sich diese um die zweite Kugelgewindespindel dreht und dabei die Drehbewegung aufgrund der Gewindesteigung in eine Linearbewegung der zweiten Kugelgewindespindel umwandelt. Die Abstimmung von Gewindesteigung von erstem Kugelgewindetrieb und zweitem Kugelgewindetrieb bedingt dann das Verhältnis mit dem der erste Kugelgewindetrieb und der zweite Kugelgewindetrieb aus dem Gehäuse ausfahren bzw. einfahren und sich relativ zueinander bewegen.

Damit das Antriebsmoment auf die erste Kugelgewindespindel übertragen wird und diese eine Drehbewegung ausführt, ist eine erste Hülse vorgesehen, die drehfest und in Axialrichtung verschiebefest mit dem Antriebsrad gekoppelt ist. Die erste Hülse weist ein Loslager mit einem axialen Freiheitsgrad auf, über das sie mit der ersten Kugelgewindespindel gekoppelt ist. Insbesondere ist diese erste Hülse als Keilwelle ausgebildet, derart dass an ihrer Außenmantelfläche Nuten angeordnet sind, in die eine Keilnabe, mithin nach innen gerichtete Fortsätze die mit der ersten Kugelgewindespindel gekoppelt sind, formschlüssig eingreifen. Hierdurch wird die Drehbewegung der Hülse an die Keilnabe und wiederum an die erste Kugelgewindespindel übertragen. Die nach innen gerichteten Fortsätze können dann in der Nut axial verschieblich verlagert werden, bei gleichzeitiger Übertragung der Drehbewegung.

Der dritte Kugelgewindetrieb und der vierte Kugelgewindetrieb fahren auf der gegenüberliegenden Seite des Teleskopaktors aus. Hierzu ist eine dritte Kugelgewindemutter mit dem Gehäuse verdrehfest und in Axialrichtung verschiebefest gekoppelt. Eine Drehbewegung der dritten Kugelgewindespindel führt somit zu einer Ausfahrbewegung bzw. Einfahrbewegung dieser gegenüber der dritten Kugelgewindemutter. Am ausfahrseitigen Ende der dritten Kugelgewindespindel ist wiederum drehfest und verschiebefest eine vierte Kugelgewindemutter gekoppelt, die die vierte Kugelgewindespindel umgreift. Die vierte Kugelgewindemutter ist somit relativ zu dem Gehäuse verfahrbar, jedoch absolut mit dem Ende der dritten Kugelgewindespindel gekoppelt.

Die vierte Kugelgewindespindel ist wiederum gegenüber einer zweiten Lagerstelle, welche an der der ersten Lagerstelle auf die Axialrichtung bezogenen, gegenüberliegenden Seite angeordnet ist, drehfest und in Axialrichtung verschiebefest gekoppelt. Die Drehbewegung der vierten Kugelgewindemutter wird somit in eine Linearbewegung der vierten Kugelgewindespindel umgesetzt. Durch das Ein- bzw. Ausfahren werden somit die erste und die zweite Lagerstelle relativ zueinander in Linearrichtung aufeinander zubewegt oder voneinander wegbewegt.

Damit nunmehr das Antriebsmoment auf die dritte Kugelgewindespindel übertragen wird, ist diese mit einer zweiten Hülse drehfest gekoppelt. Die zweite Hülse ist dabei wiederum mit dem Antriebsrad drehfest gekoppelt und weist ein drehfestes Loslager mit einem axialen Freiheitsgrad auf, so dass eine Drehbewegung der dritten Kugelgewindespindel umgesetzt wird, jedoch die dritte Kugelgewindespindel axial verschiebbar gegenüber der zweiten Hülse gelagert ist und somit aus dem Gehäuse ausfährt oder in dieses einfährt. Die zweite Hülse ist dabei bezogen auf die Radialrichtung konzentrisch in der ersten Hülse gelagert. In Axialrichtung ist die Länge der ersten Hülse und der zweiten Hülse abhängig von dem jeweiligen Ausfahrweg der mit der Hülse angetriebenen Kugelgewindespindel.

Insbesondere ist das Gehäuse selbst drehfest gelagert. Auf die Axialrichtung bezogen ist es denkbar, dass das Gehäuse sowohl in Axialrichtung selbst verfahrbar gelagert ist, als auch in Axialrichtung ortsfest gelagert ist, so dass die erste Lagerstelle durch das ausfahrseitige Ende der zweiten Kugelgewindespindel und die zweite Lagerstelle durch das ausfahrseitige Ende der vierten Kugelgewindespindel relativ gegenüber der axial festen Lagerung des Gehäuses bei Ausführung der Ein- oder Ausfahrbewegung verlagert werden.

Aufgrund der günstigen Reibungsverhältnisse der Kugelgewindetriebe sind diese auch bei sehr kleinen Steigungswinkeln nicht selbsthemmend. Im Rahmen der Erfindung ist daher weiterhin vorgesehen, dass eine Bremseinrichtung nach Erreichen der gewünschten Ausfahrlänge eine Hemmung gegen ungewolltes axiales Verschieben ausübt.

Weiterhin ist es im Rahmen der Erfindung möglich zur Positionsbestimmung eine indirekte Wegmessung über beispielsweise einen Drehgeber des Antriebsmotors durchzuführen oder aber auch alternativ ist es möglich durch axiale Wegmessung, beispielsweise einen Seilzugsensor die jeweilige Ausfahrposition zu bestimmen. Beispielsweise kann ein Messsystem vorgesehen sein, um den Gesamtausfahrweg zu bestimmen, es können auch zwei Teilmesssysteme das jeweilige Ausfahren des ersten und zweiten Paares relativ bestimmen.

Weiterhin ist im Rahmen der Erfindung vorstellbar, den Kugelgewindetrieb mit der kleinsten Tragfähigkeit durch einen Rollengewindetrieb zu ersetzen. Dies betrifft insbesondere den vierten innenliegenden Kugelgewindetrieb.

Weitere Vorteile, Merkmale, Eigenschaften und Aspekte der vorliegenden Erfindung sind Gegenstand der nachfolgenden Beschreibung. Die bevorzugte Ausführungsform ist in den schematischen Figuren dargestellt. Diese dient dem einfachen Verständnis der Erfindung. Es zeigen:
- Figur 1: den Teleskopaktor im vollständig ausgefahrenen Zustand und
- Figur 2: den Teleskopaktor im vollständig eingefahrenen Zustand.

In den Figuren werden für gleiche oder ähnliche Bauteile dieselben Bezugszeichen verwendet, auch wenn eine wiederholte Beschreibung aus vereinfachungsgründen entfällt.

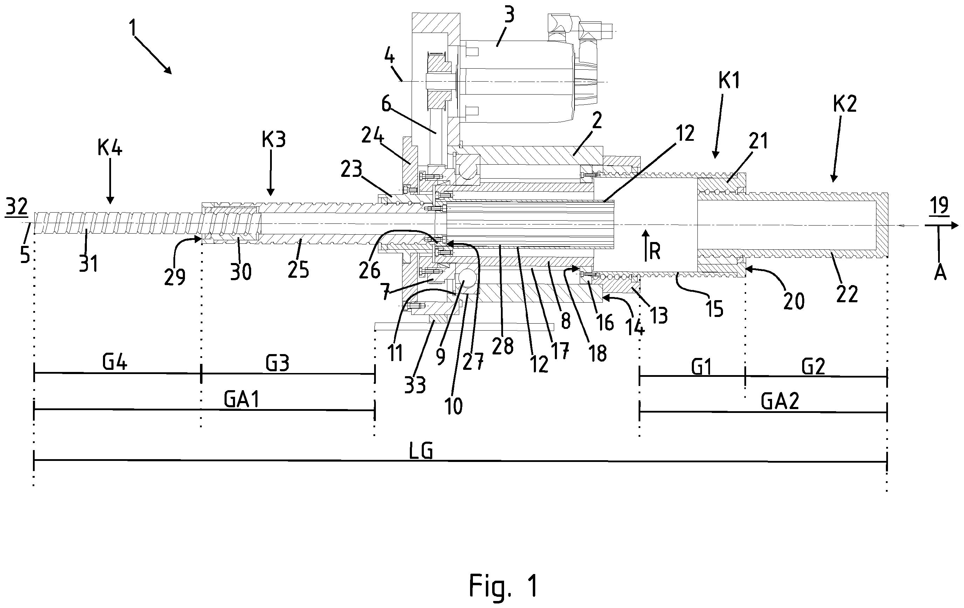

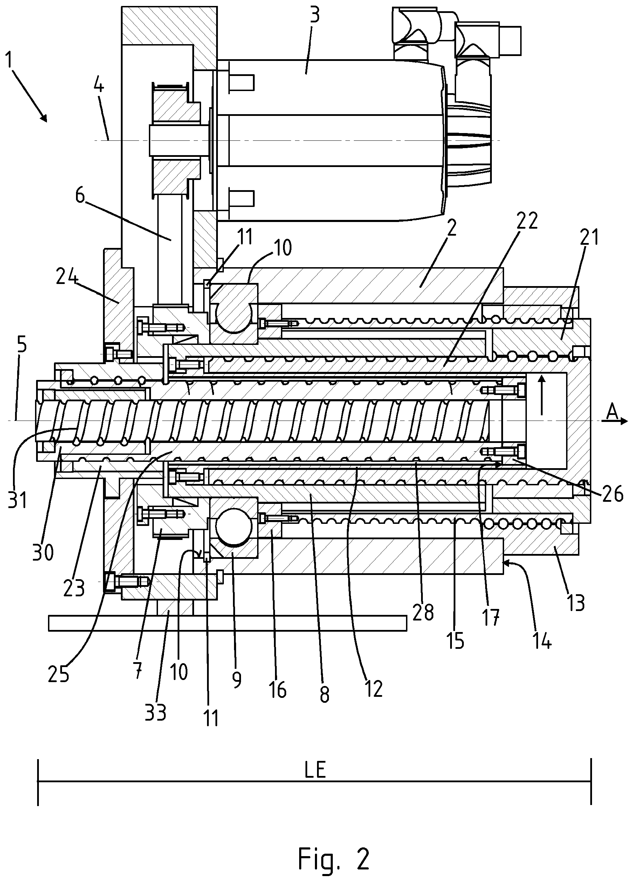

Figur 1 und 2 zeigen den erfindungsgemäßen Teleskopaktor 1 im Falle von Figur 1, im vollständig ausgefahrenen Zustand und im Falle von Figur 2, im vollständig eingefahrenen Zustand. Der Teleskopaktor 1 weist dazu ein außenliegendes Gehäuse 2 auf, wobei an dem Gehäuse 2 ein Antrieb in Form eines Motors 3 verdrehfest angeordnet ist. Der Motor 3 selbst weist dazu eine Rotationsachse 4 auf, die parallel versetzt zu einer Mittellängsachse 5 der nachfolgend beschriebenen Kugelgewindegetriebe ausgebildet ist. Damit das Antriebsmoment des Motors 3 auf die Kugelgewindetriebe übertragen wird, ist dieser über einen Riemen 6 mit einem Antriebsrad 7 gekoppelt. Die Drehbewegung des Motors 3 wird somit über den Riemen 6 auf das Antriebsrad 7 übertragen und sorgt dafür, dass das Antriebsrad 7 eine Drehbewegung ausführt.

Ferner ist es möglich, hier jedoch nicht näher dargestellt, dass die Drehbewegung nicht über einen Riemen sondern über eine Zahnradstufe oder gar einen Direktantrieb erfolgt. Im Falle des Direktantriebes würde dieser direkt um das Gehäuse 2 angeordnet sein.

Das Antriebsrad 7 selbst ist mehrteilig ausgebildet, was insbesondere durch Montage bzw. den Zusammenbau der verschiedenen Kugelgewindetriebe bedingt ist. Das Antriebsrad 7 ist verdrehfest mit einer ersten Hülse 8 gekoppelt, wobei die erste Hülse 8 wiederum drehbar durch ein Wälzlager 9 in dem Gehäuse 2 gelagert ist. In Axialrichtung A ist das Wälzlager 9 dazu in einer Vertiefung 10 des Gehäuses 2 eingelassen und mit einem Sprengring 11 gesichert. Somit ist die Hülse 8 aber auch das Antriebsrad 7 sowie das Wälzlager 9 in Axialrichtung A lagefixiert mit einem Rotationsfreiheitsgrad um die Mittellängsachse 5 gelagert.

Ferner ist in der ersten Hülse 8 konzentrisch eine zweite Hülse 12 angeordnet, welche ebenfalls drehfest mit dem Antriebsrad 7 gekoppelt ist. Eine Drehbewegung des Antriebsrades 7 sorgt somit ebenfalls für eine Drehbewegung der zweiten Hülse 12.

Damit nunmehr die Drehbewegung des Antriebsrades 7 in eine Axialbewegung in Axialrichtung A umgesetzt wird, ist eine erste Kugelgewindemutter 13 vorgesehen, die drehfest und in Axialrichtung A verschiebefest mit einem Ende 14 des Gehäuses 2 gekoppelt ist. Die erste Kugelgewindespindel 15 ist an einem innenseitigen Ende mit einer Keilnabe 16 formschlüssig verdrehfest und verschiebefest gekoppelt. Führt nunmehr die erste Hülse 8 eine Rotationsbewegung um die Mittellängsachse 5 aus, so ist ein in Radialrichtung R nach innen orientierter Fortsatz 18 an der Keilnabe 16 ausgebildet, welcher formschlüssig in die Nut 17 der ersten Hülse 8 eingreift. Die Drehbewegung wird durch diesen formschlüssigen Eingriff übertragen, wobei diese gleichzeitig in Axialrichtung A als Loslager ausgebildet ist, so dass eine Verschiebung in Axialrichtung A herbeiführbar ist. Durch die Drehbewegung der ersten Kugelgewindemutter 13 schraubt sich somit die erste Kugelgewindespindel 15 bei Ausfahrbewegung aus der Kugelgewindemutter 13 in Axialrichtung A zu einer ersten Lagerstelle 19 heraus bzw. bei umgekehrter Drehbewegung in das Gehäuse 2 hinein.

Am lagerseitigen Ende 20 der ersten Kugelgewindespindel 15 ist drehfest und verschiebefest eine zweite Kugelgewindemutter 21 gelagert. Bei Ausführung der Rotationsbewegung der ersten Kugelgewindespindel 15 rotiert somit auch die zweite Kugelgewindemutter 21, wobei die axiale Verschiebung des lagerseitigen Endes 20 der ersten Kugelgewindespindel 15 auch für eine axiale Verschiebung der zweiten Kugelgewindemutter 21 sorgt.

Die zweite Kugelgewindespindel 22 ist an der ersten Lagerstelle 19 drehfest und verschiebefest verbunden. Durch die Drehbewegung der zweiten Kugelgewindemutter 21 schraubt diese somit die zweite Kugelgewindespindel 22 aus dem Gehäuse 2 und auch aus der ersten Kugelgewindespindel 15 in Richtung der ersten Lagerstelle 19 heraus oder bei umgekehrter Drehbewegung in das Gehäuse 2 hinein. Dies erfolgt aufgrund entgegengesetzter Gewindegänge vom ersten Kugelgewindetrieb K1 und zweitem Kugelgewindetrieb K2. Die erste Lagerstelle 19 wird somit in Relation zu dem Gehäuse 2 in Axialrichtung A verschoben. Im Rahmen der Erfindung ist es, in Figur 1 nicht dargestellt, möglich ein Messsystem mit Seilzug zu verwenden, welches an der ersten Lagerstelle 19 und der vierten Kugelgewindespindel 31 den Ausfahrweg zwischen Lagerstelle 19 und vierter Kugelgewindespindel 31 misst, um somit die Gesamtverschiebung zu messen und anzuzeigen.

In Figur 2 dargestellt bilden der erste Kugelgewindetrieb und der zweite Kugelgewindetrieb das außenliegende zweite Paar, wobei die erste Kugelgewindespindel 15 die erste Hülse 8 außenseitig umgreift und die zweite Kugelgewindespindel 22 auf die Radialrichtung R bezogen zwischen erster und zweiter Hülse 8, 12 angeordnet ist.

Auf der gegenüberliegenden Seite in Axialrichtung A ist eine dritte Kugelgewindemutter 23 drehfest und verschiebefest mit dem Gehäuse 2 und hier insbesondere einem Deckel 24 des Gehäuses 2 gekoppelt. Die dritte Kugelgewindespindel 25 ist drehfest mit einer zweiten Keilnabe 26 gekoppelt, welche nach außen orientierte Fortsätze 27 aufweist, die wiederum in eine innenliegende Nut 28 der zweiten Hülse 12 derart formschlüssig eingreifen, dass eine Drehbewegung um die Mittellängsachse 5 übertragen wird und gleichzeitig eine axiale Verschieblichkeit in Form eines Loslagers ausgebildet ist. Die durch das Antriebsrad 7 auf die zweite Hülse 12 aufgebrachte Drehbewegung wird somit auf die dritte Kugelgewindespindel 25 übertragen, weshalb diese gegenüber der dritten Kugelgewindemutter 23 in Axialrichtung A aus dem Gehäuse 2 ausfährt.

Am außenseitigen Ende 29 der dritten Kugelgewindespindel 25 ist eine vierte Kugelgewindemutter 30 angeordnet. Die vierte Kugelgewindemutter 30 ist drehfest und verschiebefest mit dem Ende 29 der dritten Kugelgewindespindel 25 gekoppelt. Ein Ausfahren des Endes 29 der dritten Kugelgewindespindel 25 sorgt somit auch für eine axiale Verschiebung der vierten Kugelgewindemutter 30.

Die vierte Kugelgewindespindel 31 ist wiederum an einer zweiten Lagerstelle 32, wobei die zweite Lagerstelle 32, bezogen auf die Axialrichtung A der ersten Lagerstelle 19 gegenüberliegend ist, drehfest und verschiebefest gekoppelt. Die Drehbewegung der vierten Kugelgewindemutter 30 sorgt somit für eine Einfahr- bzw. Ausfahrbewegung der vierten Kugelgewindespindel 31 in Relation zu der vierten Kugelgewindemutter 30. Hierdurch fährt die vierte Kugelgewindespindel 31 aus der dritten Kugelgewindespindel 25 und auch aus dem Gehäuse 2 aus. Die Gewindegänge von drittem Kugelgewindetrieb K3 und viertem Kugelgewindetrieb K4 sind gegenläufig.

Gemäß der Darstellung im eingefahrenen Zustand ist die vierte Kugelgewindespindel 31 in der ersten Kugelgewindespindel 15 konzentrisch bezogen auf die Radialrichtung gelagert sowie die dritte Kugelgewindespindel 25 in die zweite Hülse 12 eingefahren.

Ferner ist ein Lager 33 vorgesehen, mit dem das Gehäuse 2 an einem nicht näher dargestellten Untergrund, Maschinenbett oder sonstigem befestigt sein kann. Dieses Lager 33 ist derart ausgebildet, dass es eine Drehsicherung gegenüber der Mittellängsachse 5 des Linearaktors sicherstellt und entweder in Axialrichtung A lagefixiert ist oder in Axialrichtung A selbst auch verschiebbar gelagert ist. Ersterenfalls ist es möglich, die erste Lagerstelle 19 und die zweite Lagerstelle 32 von einer Absolutposition des Gehäuses 2 in Axialrichtung zu verschieben. Sofern das Lager 33 selbst axial verschiebbar ausgebildet ist, ist es mit dem Teleskopaktor 1 möglich, die erste Lagerstelle 19 und die zweite Lagerstelle 32 relativ zusammenzufahren oder auseinanderzufahren, was beispielsweise bei einem Scherenantrieb einer Arbeitsbühne möglich wäre.

Weiterhin dargestellt ist in Figur 1 sowie in Figur 2 die Gesamtlänge LG im ausgefahrenen Zustand und die Gesamtlänge LE im eingefahrenen Zustand. Ferner dargestellt in Figur 1 ist der Gesamtausfahrweg, welcher sich zusammensetzt aus GA1 + GA2, da der Teleskopaktor 1 beidseitig ausfährt. Die Ausfahrwege GA1 und GA2 setzten sich wiederum zusammen aus dem Teilausfahrwegen G1 bis G4 der jeweiligen Kugelgewindetriebe K1, K2, K3, K4.

### Bezugszeichen:

- 1 -: Teleskopaktor
- 2 -: Gehäuse
- 3 -: Motor
- 4 -: Rotationsachse
- 5 -: Mittellängsachse
- 6 -: Riemen
- 7 -: Antriebsrad
- 8 -: erste Hülse
- 9 -: Wälzlager
- 10 -: Vertiefung
- 11 -: Sprengring
- 12 -: zweite Hülse
- 13 -: Gewindemutter als erste Kugelgewindemutter
- 14 -: Ende zu 2
- 15 -: Gewindespindel als erste Kugelgewindespindel
- 16 -: Keilnabe
- 17 -: Nut zu 8
- 18 -: Fortsatz zu 16
- 19 -: erste Lagerstelle
- 20 -: lagerseitiges Ende zu 15
- 21 -: Gewindemutter als zweite Kugelgewindemutter
- 22 -: Gewindespindel als zweite Kugelgewindespindel
- 23 -: Gewindemutter als dritte Kugelgewindemutter
- 24 -: Deckel zu 2
- 25 -: Gewindespindel als dritte Kugelgewindespindel
- 26 -: zweite Keilnabe
- 27 -: Fortsatz zu 26
- 28 -: Nut zu 12
- 29 -: außenseitiges Ende zu 25
- 30 -: Gewindemutter als vierte Kugelgewindemutter
- 31 -: Gewindespindel als vierte Kugelgewindespindel
- 32 -: zweite Lagerstelle
- 33 -: Lager

- A -: Axialrichtung
- G1 -: Teilausfahrweg zu K1
- G2 -: Teilausfahrweg zu K2
- G3 -: Teilausfahrweg zu K3
- G4 -: Teilausfahrweg zu K4
- GA1 -: Ausfahrweg
- GA2 -: Ausfahrweg
- LG -: Gesamtlänge im ausgefahrenen Zustand
- LE -: Gesamtlänge im eingefahrenen Zustand
- K1 -: Gewindetrieb als erster Kugelgewindetrieb
- K2 -: Gewindetrieb als zweiter Kugelgewindetrieb
- K3 -: Gewindetrieb als dritter Kugelgewindetrieb
- K4 -: Gewindetrieb als vierter Kugelgewindetrieb
- R -: Radialrichtung

## Patentansprüche

1. Teleskopaktor (1) zum Ausführen einer Linearbewegung, wobei ein Motor (3) vorgesehen ist, der ein Antriebsmoment auf einen Gewindetrieb aufbringt, so dass eine Gewindespindel linear gegenüber einer Gewindemutter ausfahrbar oder einfahrbar ist, wobei der Teleskopaktor (1) vier Gewindetriebe (K1, K2, K3, K4) aufweist und beidseitig in Axialrichtung (A) ausfährt oder einfährt, wobei sich der Gesamtausfahrweg (GA) durch vier Teilausfahrwege (G1, G2, G3, G4) zusammensetzt, wobei die vier Gewindetriebe (K1, K2, K3, K4) paarweise eingeteilt sind, wobei ein erstes Paar zu einer Seite aus dem Teleskopaktor (1) ausfahrbar ist und ein zweites Paar auf der gegenüberliegenden Seite des Teleskopaktors (1) ausfahrbar ist, **dadurch gekennzeichnet, dass** eine erste Hülse (8) vorgesehen ist, die verdrehfest mit einem Antriebsrad (7) gekoppelt ist und drehbar in einem Gehäuse (2) gelagert ist, wobei in die erste Hülse (8) das erste Paar einfahrbar ist und die erste Hülse (8) über ein Loslager mit einem axialen Freiheitsgrad drehfest mit dem zweiten Paar gekoppelt ist.

2. Teleskopaktor nach Anspruch 1, **dadurch gekennzeichnet, dass** mindestens ein Gewindetrieb als Kugelgewindetrieb (K1, K2, K3, K4) mit einer Kugelgewindespindel (15, 22, 25, 31) und einer Kugelgewindemutter (13, 21, 23, 30) ausgebildet ist und/oder dass mindestens ein Gewindetrieb als Rollengewindetrieb mit einer Rollengewindespindel und einer Rollengewindemutter ausgebildet ist.

3. Teleskopaktor nach Anspruch 1 oder 2, **dadurch gekennzeichnet, dass** die axiale Länge (LG) des vollständig ausgefahrenen Teleskopaktors (1) größer gleich dem 2,5-fachen, insbesondere größer gleich dem 2,8-fachen, bevorzugt größer gleich dem 2,9-fachen und besonders bevorzugt größer gleich dem 3-fachen der axialen Länge (LE) des vollständig eingefahrenen Teleskopaktors (1) ist.

4. Teleskopaktor nach einem der Ansprüche 1 bis 3, **dadurch gekennzeichnet, dass** die Aufteilung des Gesamtausfahrweges während der Ausfahrbewegung durch die Steigung jedes Gewindetriebes (K1, K2, K3, K4) und/oder die Steigungsrichtung jedes Gewindetriebes (K1, K2, K3, K4) bestimmt wird, wobei bevorzugt die Steigungsrichtung der zwei Gewindetriebe eines jeden Paares entgegengesetzt orientiert sind.

5. Teleskopaktor nach einem der Ansprüche 1 bis 4, **dadurch gekennzeichnet, dass** jedes Paar eine innenliegende und eine außenliegende Gewindespindel aufweist, wobei bevorzugt das erste Paar innenliegend in dem zweiten Paar angeordnet ist.

6. Teleskopaktor nach einem der Ansprüche 1 bis 5, **dadurch gekennzeichnet, dass** das Antriebsmoment auf das innere erste Paar und gleichzeitig auf das äußere zweite Paar aufgebracht wird.

7. Teleskopaktor nach einem der Ansprüche 1 bis 6, **dadurch gekennzeichnet, dass** ein außen liegendes Gehäuse (2) vorgesehen ist, an dem eine erste Gewindemutter (13) für den außenliegenden ersten Gewindetrieb (K1) des außenliegenden ersten Paares drehfest und in Axialrichtung (A) verschiebefest mit dem Gehäuse (2) gekoppelt ist.

8. Teleskopaktor nach Anspruch 7, **dadurch gekennzeichnet, dass** eine zweite Gewindemutter (21) drehfest und in Axialrichtung (A) verschiebefest mit der ersten Gewindespindel (15) gekoppelt ist, wobei die zweite innenliegende Gewindespindel (22) des außen liegendenzweiten Paares drehfest und in Axialrichtung (A) verschiebefest mit einer ersten zu verschiebenden Lagerstelle (19) gekoppelt ist.

9. Teleskopaktor nach einem der Ansprüche 1 bis 8, **dadurch gekennzeichnet, dass** eine dritte Gewindemutter (23) einer dritten außenliegenden Gewindespindel (25) des innenliegenden Paares drehfest und in Axialrichtung (A) verschiebefest mit dem Gehäuse (2) gekoppelt ist.

10. Teleskopaktor nach Anspruch 9, **dadurch gekennzeichnet, dass** eine vierte Gewindemutter (30) mit einem axialseitigen Ende (29) der dritten Gewindespindel (25) verdrehfest und in Axialrichtung (A) verschiebefest gekoppelt ist.

11. Teleskopaktor nach Anspruch 10, **dadurch gekennzeichnet, dass** eine vierte Gewindespindel (31) drehfest und in Axialrichtung (A) verschiebefest mit einer zweiten Lagerstelle (32) gekoppelt ist, wobei die zweite Lagerstelle (32) auf der der ersten Lagerstelle (19) in Axialrichtung (A) gegenüberliegenden Seite angeordnet ist.

12. Teleskopaktor nach einem der Ansprüche 1 bis 11, **dadurch gekennzeichnet, dass** eine Drehbewegung der ersten Hülse (8) eine Drehbewegung der ersten Gewindespindel (15) hervorruft, so dass die erste Gewindespindel (15) axial gegenüber der ersten Gewindemutter (13) ausfahrbar oder einfahrbar ist und aufgrund der Koppelung der ersten Gewindespindel (15) mit der zweiten Gewindemutter (21) die zweite Gewindespindel (25) relativ axial gegenüber der ersten Gewindespindel (15) einfahrbar oder ausfahrbar ist.

13. Teleskopaktor nach einem der Ansprüche 1 bis 12, **dadurch gekennzeichnet, dass** eine zweite Hülse (12) vorgesehen ist, die drehfest mit einem Antriebsrad (7) gekoppelt ist und drehbar in dem Gehäuse (2) gelagert ist, wobei in die zweite Hülse (12) das erste Paar einfahrbar ist und die zweite Hülse (12) ein Loslager mit einem axialen Freiheitsgrad aufweist und drehfest mit der dritten Gewindespindel (25) gekoppelt ist.

14. Teleskopaktor nach Anspruch 13, **dadurch gekennzeichnet, dass** eine Drehbewegung der zweiten Hülse (12) eine Drehbewegung der dritten Gewindespindel (25) hervorruft, so dass die dritte Gewindespindel (25) in Axialrichtung (A) ausfahrbar oder einfahrbar ist und die vierte Gewindespindel (31) relativ zu der dritten Kugelgewindespindel (25) ausfahrbar oder einfahrbar ist.

15. Teleskopaktor nach Anspruch 13 oder 14, **dadurch gekennzeichnet, dass** zwischen erster Hülse (8) und zweiter Hülse (12) bei eingefahrenem Teleskopaktor (1) bezogen auf die Radialrichtung (R) die zweite Gewindespindel (22) angeordnet ist.

## Claims

1. Telescopic actuator (1) for carrying out a linear movement, wherein a motor (3) is provided which applies a drive torque to a screw drive such that a screw spindle is linearly extendable or retractable with respect to a screw nut, wherein the telescopic actuator (1) has four screw drives (K1, K2, K3, K4) and is extended or retracted on both sides in the axial direction (A), wherein the total extension path (GA) is constituted by four partial extension paths (G1, G2, G3, G4), wherein the four screw drives (K1, K2, K3, K4) are divided into pairs, wherein a first pair is extendable to one side from the telescopic actuator (1) and a second pair is extendable on the opposite side of the telescopic actuator (1), **characterised in that** a first sleeve (8) is provided which is coupled non-rotatably to a drive wheel (7) and is mounted rotatably in a housing (2), wherein the first pair is retractable into the first sleeve (8) and the first sleeve (8) is coupled non-rotatably to the second pair via a floating bearing with an axial degree of freedom.

2. Telescopic actuator according to claim 1, **characterised in that** at least one screw drive is designed as a ball screw drive (K1, K2, K3, K4) with a ball screw spindle (15, 22, 25, 31) and a ball screw nut (13, 21, 23, 30) and/or that at least one screw drive is designed as a roller screw drive with a roller screw spindle and a roller screw nut.

3. Telescopic actuator according to claim 1 or 2, **characterised in that** the axial length (LG) of the telescopic actuator (1) when fully extended is greater than or equal to 2.5 times, in particular greater than or equal to 2.8 times, preferably greater than or equal to 2.9 times and most preferably greater than or equal to 3 times the axial length (LE) of the telescopic actuator (1) when fully retracted.

4. Telescopic actuator according to any of claims 1 to 3, **characterised in that** the division of the total extension path during the extension movement is determined by the pitch of each screw drive (K1, K2, K3, K4) and/or the pitch direction of each screw drive (K1, K2, K3, K4), wherein the pitch directions of the two screw drives of each pair are preferably oriented in opposite directions.

5. Telescopic actuator according to any of claims 1 to 4, **characterised in that** each pair has an inner and an outer screw spindle, wherein the first pair is preferably arranged inside the second pair.

6. Telescopic actuator according to any of claims 1 to 5, **characterised in that** the drive torque is applied to the inner first pair and at the same time to the outer second pair.

7. Telescopic actuator according to any of claims 1 to 6, **characterised in that** an outer housing (2) is provided to which a first screw nut (13) for the outer first screw drive (K1) of the outer first pair is coupled non-rotatably and, in the axial direction (A), non-displaceably to the housing (2).

8. Telescopic actuator according to claim 7, **characterised in that** a second screw nut (21) is coupled non-rotatably and, in the axial direction (A), non-displaceably, to the first screw spindle (15), wherein the second inner screw spindle (22) of the outer second pair is coupled non-rotatably and, in the axial direction (A), non-displaceably to a first bearing point (19) to be displaced.

9. Telescopic actuator according to any of claims 1 to 8, **characterised in that** a third screw nut (23) of a third outer screw spindle (25) of the inner pair is coupled non-rotatably and, in the axial direction (A), non-displaceably, to the housing (2).

10. Telescopic actuator according to claim 9, **characterised in that** a fourth screw nut (30) is coupled non-rotatably and, in the axial direction (A), non-displaceably, to an axial-side end (29) of the third screw spindle (25).

11. Telescopic actuator according to claim 10, **characterised in that** a fourth screw spindle (31) is coupled non-rotatably and, in the axial direction (A), non-displaceably, to a second bearing point (32), wherein the second bearing point (32) is arranged on the side opposite the first bearing point (19) in the axial direction (A).

12. Telescopic actuator according to any of claims 1 to 11, **characterised in that** a rotational movement of the first sleeve (8) causes a rotational movement of the first screw spindle (15), such that the first screw spindle (15) is axially extendable or retractable with respect to the first screw nut (13), and, due to the coupling of the first screw spindle (15) to the second screw nut (21), the second screw spindle (25) is relatively axially extendable or retractable with respect to the first screw spindle (15).

13. Telescopic actuator according to any of claims 1 to 12, **characterised in that** a second sleeve (12) is provided which is coupled non-rotatably to a drive wheel (7) and is mounted rotatably in the housing (2), wherein the first pair is retractable into the second sleeve (12) and the second sleeve (12) has a floating bearing with an axial degree of freedom and is coupled non-rotatably to the third screw spindle (25).

14. Telescopic actuator according to claim 13, **characterised in that** a rotational movement of the second sleeve (12) causes a rotational movement of the third screw spindle (25), such that the third screw spindle (25) is extendable or retractable in the axial direction (A) and the fourth screw spindle (31) is extendable or retractable relative to the third ball screw spindle (25).

15. Telescopic actuator according to claim 13 or 14, **characterised in that** the second screw spindle (22) is arranged between the first sleeve (8) and the second sleeve (12), with respect to the radial direction (R), when the telescopic actuator (1) is retracted.

## Revendications

1. Actionneur télescopique (1) pour la réalisation d'un mouvement linéaire, dans lequel un moteur (3) est prévu, lequel applique un moment d'entraînement à un entraînement par filetage de sorte qu'une broche filetée puisse être sortie ou entrée de manière linéaire par rapport à un écrou fileté, dans lequel l'actionneur télescopique (1) présente quatre entraînements par filetage (K1, K2, K3, K4) et sort ou entre de part et d'autre dans le sens axial (A), dans lequel la course de sortie entière (GA) se compose de quatre courses de sortie partielles (G1, G2, G3, G4), dans lequel les quatre entraînements par filetage (K1, K2, K3, K4) sont répartis par paire, dans lequel une première paire peut être sortie d'un côté de l'actionneur télescopique (1) et une seconde paire peut être sortie sur le côté opposé de l'actionneur télescopique (1), **caractérisé en ce qu'**une première douille (8) est prévue, laquelle est couplée sans pouvoir tourner avec une roue d'entraînement (7) et est logée dans un boîtier (2) de manière à pouvoir tourner, dans lequel la première paire peut être entrée dans la première douille (8) et la première douille (8) est couplée par le biais d'un palier libre avec un degré de liberté axial sans pouvoir tourner avec la seconde paire.

2. Actionneur télescopique selon la revendication 1, **caractérisé en ce qu'**au moins un entraînement par filetage est réalisé comme entraînement par filetage à bille (K1, K2, K3, K4) avec une broche filetée à bille (15, 22, 25, 31) et un écrou fileté à bille (13, 21, 23, 30) et/ou qu'au moins un entraînement par filetage est réalisé comme entraînement par filetage à rouleau avec une broche filetée à rouleau et un écrou fileté à rouleau.

3. Actionneur télescopique selon la revendication 1 ou 2, **caractérisé en ce que** la longueur axiale (LG) de l'actionneur télescopique (1) sorti complètement est supérieure ou égale à 2,5 fois, en particulier supérieure ou égale à 2,8 fois, de préférence supérieure ou égale à 2,9 fois et de manière de loin préférée supérieure ou égale à 3 fois la longueur axiale (LE) de l'actionneur télescopique (1) entré complètement.

4. Actionneur télescopique selon l'une quelconque des revendications 1 à 3, **caractérisé en ce que** la répartition de la course de sortie entière est déterminée pendant le mouvement de sortie par l'inclinaison de chaque entraînement par filetage (K1, K2, K3, K4) et/ou le sens d'inclinaison de chaque entraînement par filetage (K1, K2, K3, K4), dans lequel de préférence le sens d'inclinaison des deux entraînements par filetage de chaque paire sont orientés à l'opposé.

5. Actionneur télescopique selon l'une quelconque des revendications 1 à 4, **caractérisé en ce que** chaque paire présente une broche filetée intérieure et une broche filetée extérieure, dans lequel de préférence la première paire est agencée à l'intérieur dans la seconde paire.

6. Actionneur télescopique selon l'une quelconque des revendications 1 à 5, **caractérisé en ce que** le moment d'entraînement est appliqué à la première paire intérieure et simultanément à la seconde paire extérieure.

7. Actionneur télescopique selon l'une quelconque des revendications 1 à 6, **caractérisé en ce qu'**un boîtier extérieur (2) est prévu, au niveau duquel un premier écrou fileté (13) pour le premier entraînement par filetage (K1) extérieur de la première paire extérieure est couplé sans pouvoir tourner et dans le sens axial (A) sans pouvoir se déplacer avec le boîtier (2).

8. Actionneur télescopique selon la revendication 7, **caractérisé en ce qu'**un deuxième écrou fileté (21) est couplé sans pouvoir tourner et dans le sens axial (A) sans pouvoir se déplacer avec la première broche filetée (15), dans lequel la deuxième broche filetée intérieure (22) de la deuxième paire extérieure est couplée sans pouvoir tourner et dans le sens axial (A) sans pouvoir se déplacer avec un premier point d'appui (19) à déplacer.

9. Actionneur télescopique selon l'une quelconque des revendications 1 à 8, **caractérisé en ce qu'**un troisième écrou fileté (23) d'une troisième broche filetée extérieure (25) de la paire intérieure est couplé sans pouvoir tourner et dans le sens axial (A) sans pouvoir se déplacer avec le boîtier (2).

10. Actionneur télescopique selon la revendication 9, **caractérisé en ce qu'**un quatrième écrou fileté (30) est couplé avec une extrémité côté axial (29) de la troisième broche filetée (25) sans pouvoir tourner et dans le sens axial (A) sans pouvoir se déplacer.

11. Actionneur télescopique selon la revendication 10, **caractérisé en ce qu'**une quatrième broche filetée (31) est couplée sans pouvoir tourner et dans le sens axial (A) sans pouvoir se déplacer avec un second point d'appui (32), dans lequel le second point d'appui (32) est agencé sur le côté opposé au premier point d'appui (19) dans le sens axial (A).

12. Actionneur télescopique selon l'une quelconque des revendications 1 à 11, **caractérisé en ce qu'**un mouvement rotatif de la première douille (8) suscite un mouvement rotatif de la première broche filetée (15) de sorte que la première broche filetée (15) puisse être sortie ou entrée axialement par rapport au premier écrou fileté (13) et en raison du couplage de la première broche filetée (15) avec le deuxième écrou fileté (21) la deuxième broche filetée (25) puisse être entrée ou sortie relativement axialement par rapport à la première broche filetée (15).

13. Actionneur télescopique selon l'une quelconque des revendications 1 à 12, **caractérisé en ce qu'**une seconde douille (12) est prévue, laquelle est couplée sans pouvoir tourner avec une roue d'entraînement (7) et est logée de manière à pouvoir tourner dans le boîtier (2), dans lequel dans la seconde douille (12) la première paire peut être entrée et la seconde douille (12) présente un palier libre avec un degré de liberté axial et est couplée sans pouvoir tourner avec la troisième broche filetée (25).

14. Actionneur télescopique selon la revendication 13, **caractérisé en ce qu'**un mouvement rotatif de la seconde douille (12) suscite un mouvement rotatif de la troisième broche filetée (25) de sorte que la troisième broche filetée (25) puisse être sortie ou entrée dans le sens axial (A) et la quatrième broche filetée (31) puisse être sortie ou entrée par rapport à la troisième broche filetée à bille (25).

15. Actionneur télescopique selon la revendication 13 ou 14, **caractérisé en ce que** la deuxième broche filetée (22) est agencée entre la première douille (8) et la seconde douille (12) en cas d'actionneur télescopique (1) entré par rapport au sens radial (R).
